Europäisches Patentamt

European Patent Office

Office européen des brevets

(19)

(11) Veröffentlichungsnummer: **0 167 551**
**B1**

(12) # EUROPÄISCHE PATENTSCHRIFT

(45) Veröffentlichungstag der Patentschrift:
**15.11.89**

(21) Anmeldenummer: **85900065.5**

(22) Anmeldetag: **20.12.84**

(86) Internationale Anmeldenummer:
**PCT/DE 84/00278**

(87) Internationale Veröffentlichungsnummer:
**WO 85/02913 (04.07.85 Gazette 85/15)**

(51) Int. Cl.⁴: **G 02 C 5/12**

(54) **WEICHER BRILLEN-SATTELSTEG.**

(30) Priorität: **20.12.83 DE 3345992**

(43) Veröffentlichungstag der Anmeldung:
**15.01.86 Patentblatt 86/3**

(45) Bekanntmachung des Hinweises auf die Patenterteilung:
**15.11.89 Patentblatt 89/46**

(84) Benannte Vertragsstaaten:
**AT BE CH FR GB IT LI LU NL SE**

(56) Entgegenhaltungen:
**DE-A-2 750 910**
**DE-A-2 938 241**
**DE-C-349 121**
**FR-A-2 203 987**

(73) Patentinhaber: **Optische Werke G. Rodenstock,
Isartalstrasse 43, D-8000 München 5 (DE)**

(72) Erfinder: **PELLERT, Heinz, Hornstr. 15, D-8000
München 40 (DE)**

(74) Vertreter: **Münich, Wilhelm, Dr., Kanzlei Münich,
Steinmann, Schiller Willibaldstrasse 36/38, D-8000
München 21 (DE)**

EP 0 167 551 B1

## Beschreibung

Die Erfindung bezieht sich auf einen weichen Brillen-Sattelsteg gemäß dem Oberbegriff des Patentanspruchs 1.

Derartige Brillen-Sattelstege sind seit langem, beispielsweise aus der US-PS-2 774 279, der US-PS-3 584 939 oder der DE-OS-2 545 683 bekannt. In diesen Druckschriften sind weitgehend gleiche Brillen-Sattelstege beschrieben, die homogen aus einem weichen Material, beispielsweise Silikonkautschuk oder einem Material auf Naturkautschukbasis bestehen.

Da das verwendete homogene Material sehr weich ist und damit nur eine geringe Stabilität aufweist, ist bei diesen bekannten Brillen-Sattelstegen die Befestigung an der Brillenfassung problematisch.

Andererseits ist in der US-PS-1 184 792 vorgeschlagen worden, ein Material auf einer dünnen, federnden Metallfolie aufzubringen. Die dünne Metallfolie legt sich an die Brillenfassung an, so daß ein einigermaßen sicherer Halt gewährleistet ist. Das auf der Metallfolie aufgebrachte Material ist jedoch kein weiches Material im Sinne des Oberbegriffs des Patentanspruchs 1, sondern ein Material, das insbesondere unter dem Gesichtspunkt ausgewählt ist, daß bei Kälte auf dem Nasenrücken keine partiellen Erfrierungen an den Stellen auftreten sollen, an denen eine Metallbrille aufliegt.

Bei einem weiteren in der DE-OS-3 212 686 gemachten Vorschlag wird in einem weichen Brillen-Sattelsteg aus Silikonkautschuk eine metallene Feder eingebettet, die die beiden Seitenflügel zu einer Anlage an der Brillenfassung vorspannt. Zusätzlich ist der Sattelsteg an der Querbrücke mit einer Schraube angeschraubt.

Das Einbetten einer metallenen Feder mit den erforderlichen geringen Toleranzen in dem Silikonkautschuk ist jedoch fertigungstechnisch aufwendig, so daß dieser Brillensattelsteg teuer in der Herstellung ist. Darüberhinaus erlaubt auch bei dieser Konstruktion das weiche Material, in dem die Nut ausgebildet ist, keine zuverlässige formschlüssige Verbindung. Insbesondere bei feinstrukturierten Metallfassungen ist dabei ein Abgleiten des Sattelstegs von den Gläserringen möglich.

Der Erfindung liegt die Aufgabe zugrunde, einen weichen Brillen-Sattelsteg gemäß dem Oberbegriff des Patentanspruchs 1 derart weiterzubilden, daß bei einfachem Aufbau und damit geringen Herstellkosten eine zuverlässige Verbindung mit der Brillenfassung gewährleistet ist.

Diese Aufgabe wird erfindungsgemäß durch die im kennzeichnenden Teil des Patentanspruchs 1 angegebenen Merkmale gelöst.

Erfindungsgemäß weist der weiche Sattelsteg einen harten elastischen Kern auf, in dem die Nut zum Aufrasten auf die Brillenfassung ausgebildet ist. Da die Nut nicht mit weichem Material bedeckt ist, ist jederzeit ein festes Aufrasten und damit ein guter Sitz an der Brillenfassung gewährleistet. Darüberhinaus hat es sich überraschenderweise herausgestellt, daß der weiche Brillen-Sattelsteg, der aus einem harten elastischen Kern mit einer Weichstoff-Auflage besteht, angenehmere Trageeigenschaften hat als ein homogen aus einem weichen Material bestehender Brillen-Sattelsteg. Dies ist auf die optimale Druckverteilung zurückzuführen, die sich aufgrund des harten elastischen Kerns ergibt. Der Kern weist im unteren Bereich der Seitenflügel jeweils mindestens einen Durchbruch auf. Dieser Durchbruch setzt - insbesondere dann, wenn die Fläche des unteren Bereichs im Vergleich zu der des oberen Bereichs vergrößert ist - die Stabilität des Kerns herab, so daß eine gute Anpassung an die Nasenform und damit eine gleichmäßige Druckverteilung gewährleistet ist.

Die Durchbrüche im Bereich der Seitenflügel erlauben darüberhinaus eine sehr gute Verankerung des weichen Materials, das die Ummantelung bildet, am Kern.

Weitere Merkmale der Erfindung sind in den Unteransprüchen gekennzeichnet.

Der Kern kann beispielsweise aus einem federelastischen Metall bestehen. Gemäß Anspruch 2 kann der Kern auch aus einem Kunststoff bestehen. Dabei können unter anderem die in der DE-OS-2 750 910 für weiche Seitenstegplättchen angegebenen Kernmaterialien verwendet werden. Ausdrücklich wird jedoch darauf hingewiesen, daß die dortige Aufzählung nicht abschließend ist.

Bei der Weiterbildung gemäß Anspruch 3 ist die Form des Kerns der Form der Seitenflügel und der Querbrücke angepaßt. Hierdurch ist der weiche Sattelsteg auch im Bereich der die Seitenflügel verbindenden Querbrücke in seiner Lage sehr gut fixiert.

Eine gleichmäßige Druckverteilung und damit eine große wirksame Auflagefläche auf der Nase, durch die die Hautreizung äußerst klein gehalten werden kann, kann durch eine spezielle Gestaltung des Kerns erreicht werden, bei der die Dicke und damit die Stabilität des Kerns so bemessen ist, daß eine gute Anpassung an die Nasenform gewährleistet ist.

Die Verwendung eines harten Kerns erlaubt es, den Sattelsteg ohne Vorspannung auf die Brillenfassung aufzurasten.

Die Erfindung wird nachstehend anhand eines Ausführungsbeispiels unter Bezugnahme auf die Zeichnung näher beschrieben, in der zeigen:

Fig. 1    eine Vorderansicht eines erfindungsgemäßen weichen Brillen-Sattelstegs,

Fig. 2    einen Querschnitt durch einen Seitenflügel dieses Sattelstegs und

Fig. 3    eine Seitenansicht des Seitenflügels.

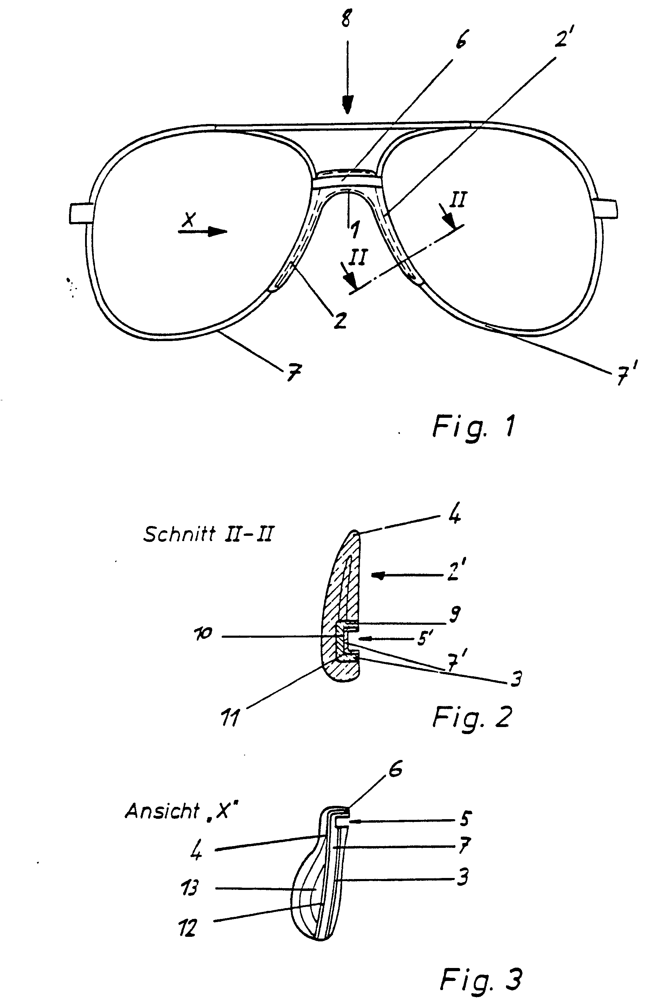

Fig. 1 zeigt ein Ausführungsbeispiel eines Brillen-Sattelstegs, der in an sich üblicher Weise aus einer Querbrücke 1 und zwei Seitenflügeln 2 bzw. 2 besteht, mit denen der Sattelsteg auf dem Nasenwurzelbereich eines Brillenträgers aufliegt.

Wie insbesondere die Fig. 2 und 3 zeigen, weist der weiche Brillen-Sattelsteg einen harten Kern 3 und eine Ummantelung 4 aus einem weichen Material auf.

Bei dem gezeigten Ausführungsbeispiel ist der Kern 3 einstückig ausgebildet und in seiner Form der Form der Querbrücke 1 und der Seitenflügel 2 und 2' angepaßt. In dem harten Kern 3 befinden sich Nuten 5 und 5' mit denen der weiche Brillen-Sattelsteg auf eine Fassungsbrücke 6 und Gläserringe 7 bzw. 7' einer in Fig. 1 gezeigten Brillenfassung 8 aufrastbar ist.

Die Ummantelung 4 aus einem weichen Material des Kerns 1 ist mindestens auf den Flächen des Kerns aufgebracht, mit denen der Sattelsteg auf der Nase des Brillenträgers aufliegt. In jedem Falle sind jedoch die Begrenzungsflächen 9, 10 und 11 der Nuten 5 bzw. 5' frei von der Schicht aus einem weichen Material.

Fig. 3 zeigt eine Seitenansicht des Seitenflügels 2. Die Breite des Seitenflügels 2 ist im unteren Bereich des Seitenflügels größer als im oberen Bereich, um in diesem für Druckstellen etc. kritischen Bereich der Nasenwurzel eine größere Auflagefläche zu erzielen. Das Seitenflügel-Teil 12 des Kerns 3 ist in seinem Abmessungen dem Außenumriß des Seitenflügels 2 angepaßt. Um die Stabilität des Kerns 1 herabzusetzen, so daß sich der Seitenflügel 2 besser der Nasenform anpassen kann, ist im unteren Bereich des Seitenflügel-Teils 2 ein Durchbruch 13 in Form eines Auges vorgesehen. Das Auge 13 wird von dem weichen Material 4 durchsetzt, so daß das Auge 13 die Verankerung der Ummantelung 4 an dem Kern verbessert.

Der vorstehend beschriebene Sattelsteg kann beispielsweise einen Kern aus Zelluloseacetat oder Zellulosepropionat und eine Weichstoff-Ummantelung aus Silikonkautschuk aufweisen. Das Material der Weichstoff-Ummantelung hat bevorzugterweise eine Shore-A-Härte nach DIN 53 505 von 35 bis 50, während die Shore-A-Härte des Kerns ca. 100 beträgt. Die Dicke der Weichstoff-Ummantelung kann einige mm betragen, sie kann jedoch aufgrund der erfindungsgemäßen Maßnahmen bis auf ca. 0,1 mm herabgesetzt werden, ohne daß die weiche Charakteristik des Sattelstegs verlorengeht und beim Brillenträger Druckstellen entstehen, wie sie bei den bekannten harten Sattelstegen vorkommen. Der Außenumriß des Kerns kann dabei ca. 2 mm hinter dem Außenumriß des Seitenflügels liegen.

Im Rahmen des vorstehend exemplarisch beschriebenen allgemeinen Erfindungsgedankens sind natürlich die verschiedensten Modifikationen möglich.

Beispielsweise ist es möglich, auf die Nut 5 im Bereich der Querbrücke des Kerns zu verzichten und gegebenenfalls eine Befestigung mit einem mechanischen Befestigungselement, wie einer Schraube, vorzusehen. Ferner kann der Sattelsteg auch zusätzlich zum Aufrasten auf die Fassungsbrücke in diesem Bereich an der Fassung verschraubt werden.

Ferner können für den Kern und die Weichstoff-Ummantelung die verschiedensten Materialien anstelle der vorstehend angegebenen verwendet werden. Eine nicht-abschließende Aufzählung derartiger Materialien ist beispielsweise in der DE-OS-2 750 910 angegeben. Darüberhinaus können die Querschnittsabmessungen des Kerns örtlich unterschiedlich der Notwendigkeit einer optimalen Druckverteilung angepaßt werden, so daß die Stabilität des Kerns zwar eine zu starke Durchwölbung verhindert, eine optimale Anpassung an die Nasenform aber ermöglicht.

Auch können anstelle des einen Durchbruchs im unteren Teil des Kerns im Seitenflügel-Bereich mehrere vorgesehen werden, um die Stabilität und damit die Durchwölbung des erfindungsgemäßen Sattelstegs entsprechend einzustellen. Darüberhinaus können auch an anderen Stellen des Kerns Durchbrüche vorgesehen werden.

## Patentansprüche

1. Weicher zur Auflage auf dem Nasenwurzelbereich bestimmter Brillen-Sattelsteg mit Seitenflügeln, die durch eine Querbrücke verbunden sind, und mit Nuten, zum Aufrasten auf die Gläserringe und gegebenenfalls auf die Fassungsbrücke sowie einem aus einem harten elastischen Material bestehenden Kern (3) dadurch gekennzeichnet, daß die Nuten (5, 5') in dem Kern ausgebildet sind, daß der Kern mit Ausnahme der die Nuten (5, 5') bildenden Flächen (9, 10, 11) mit weichem Material (4) ummantelt ist und daß der Kern (3) im unteren Auflagebereich der Seitenflügel (2, 2') jeweils mindestens einen Durchbruch (13) aufweist.

2. Sattelsteg nach Anspruch 1, dadurch gekennzeichnet, daß der Kern (3) aus einem Kunststoff besteht, der eine hohe Elastizität und eine Shore-A-Härte von mehr als 90 hat.

3. Sattelsteg nach Anspruch 1 oder 2, dadurch gekennzeichnet, daß der Umriß des Kerns (3) etwa parallel zur Außenkontur des Sattelstegs verläuft.

4. Sattelsteg nach Anspruch 3, dadurch gekennzeichnet, daß das weiche Ummantelungs-Material (4) eine Härte von ca. 35 bis 50 Shore-A hat.

5. Sattelsteg nach einem der Ansprüche 1 bis 4, dadurch gekennzeichnet, daß das Spreizmaß des Sattelstegs dem Verlauf der Gläserringe (7, 7') der Fassung angepaßt ist.

## Claims

1. Soft spectacle bridge intended to lie on the nose root area with two side are connected by a transverse bridge, and with grooves for snapping into position on the lens rings and, if necessary, on the frame bridge, and with a core (3) consisting of a hard, elastic material, characterized in that the grooves (5, 5') are formed in the core, that the core is coated with a soft material (4) with the exception of those areas (9, 10, 11) which form the grooves (5, 5'), and that the core (3) in the lower contact area of each of the side (2, 2') possesses at least opening (13).

2. Spectacle bridge accoeding to claim 1, characterized in that the core (3) consists of a plastics material which has high elasticity and a Shore A hardness of more then 90.

3. Spectacle bridge according to claim 1 or 2, characterized in that the periphery of the core (3) runs roughly parallel to the outer contour of the spectacle bridge.

4. Spectacle bridge according to claim 3, characterized in that the soft coating material (4) a hardness of approx. 35 to 50 Shore A.

5. Spectacle bridge according to of claims 1 to 4, characterized in that the spread measurement of the spectacle bridge is adapted to the course of the lens rings (7, 7').

## Revendications

1. Pont de lunettes mou destiné à appuyer ou appliquer sur la racine du nez des ailes latérales, jointes par un pont transversal, et comportant des rainures pour l'encliquetage sur les anneaux de retenue des verres et sur le pont de la monture, ainsi qu'un noyau (3) composé d'une matière élastique dure, pont caractérisé en ce que les rainures (5, 5') sont formées dans le noyau, en ce que le noyau qui - à l'exception des surfaces (9, 10, 11) qui forment les rainures (5, 5') - présente un revêtement de matière molle (4) et en ce que le noyau (3) présente, dans la partie d'appui inférieure de chacune des ailes latérales (2, 2'), au moins une perforation (13).

2. Pont de lunettes selon la revendication 1, caractérisé en ce que le noyau (3) est composé d'une matière plastique présentant une élasticité élevée et une dureté Shore-A de plus de 90.

3. Pont de lunettes selon la revendication 1 ou 2, caractérisé en ce que le contour du noyau (3) suit approximativement en parallèle le contour extérieur du pont de lunettes.

4. Pont de lunettes selon la revendication 3, caractérisé en ce que la matière molle du revêtement (4) présente une dureté Shore-A d'environ 35 à 50.

5. Pont de lunettes selon l'une quelconque des revendications 1 à 4, caractérisé en ce que l'extensibilité du pont de lunettes est adaptée à la forme des anneaux (7, 7') des verres de la monture.

*Fig. 1*

Schnitt II–II

*Fig. 2*

Ansicht „X"

*Fig. 3*